(19) 

**Europäisches Patentamt**
**European Patent Office**
**Office européen des brevets**

(11) **EP 4 760 749 A1**

(12) **EUROPEAN PATENT APPLICATION**

(43) Date of publication:
**17.06.2026 Bulletin 2026/25**

(21) Application number: **24307091.9**

(22) Date of filing: **12.12.2024**

(51) International Patent Classification (IPC):
**G21C 17/00** (2006.01)  **G01N 3/42** (2006.01)

(52) Cooperative Patent Classification (CPC):
**G21C 17/00; G01N 3/28; G01N 3/42; G21C 17/06;**
G01N 2203/0298

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **Commissariat à l'Energie Atomique et aux Energies Alternatives**
  **75015 Paris (FR)**

• **Sun Yat-Sen University**
  **Zhuhai Guangdong 519082 (CN)**

(72) Inventors:
• **ROBERTSON, Christian**
  **75015 PARIS (FR)**
• **MA, Xianfeng**
  **Zhuhai, 519082 (CN)**

(74) Representative: **Santarelli**
  **Tour Trinity**
  **1 bis Place de la Défense**
  **92400 Courbevoie (FR)**

(54) **METHOD FOR THE ASSESSMENT OF THE IRRADIATION DAMAGE IN NUCLEAR REACTOR PRESSURE VESSELS**

(57)  A method for the assessment of the irradiation embrittlement in a nuclear reactor pressure vessel RPV (10) comprises the steps (a): cutting a specimen (20, 40) from an un-irradiated RPV (10); (b): measuring grain size $D_g$ of each grain (30) on a region (21, 41) of the specimen (20, 40); (c): performing several indentation tests at a temperature on this region; (d) to (g): for each test, calculating for each grain (30) the slip band number density $N/D_g$ from equations; (h): repeating steps (c) to (g) at different temperatures to obtain an un-irradiated curve around the ductile-brittle transition temperature DBTT; (i): submitting specimen (40) to an irradiation dose and repeating steps (b) to (g) at different temperatures to obtain an irradiated curve around the DBTT; (j) and (k): assessing the irradiation embrittlement in the RPV from the ductile-brittle transition shift between the un-irradiated and irradiated curves.

[Fig. 2]

FIG. 2

**Description**

The present invention concerns a method for the assessment of the irradiation embrittlement in a nuclear reactor pressure vessel.

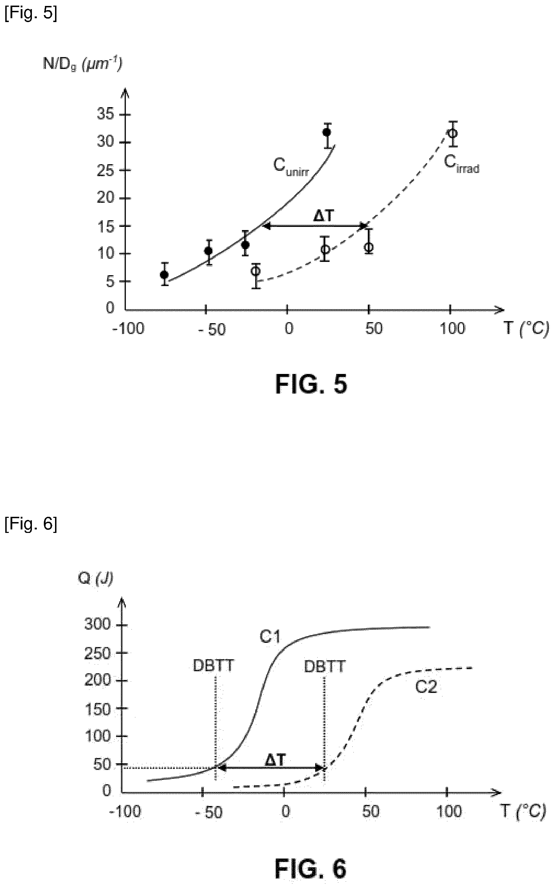

The safe long-term operation of nuclear reactor pressure vessel (or "RPV") depends on the ability of the steel making up the reactor walls (called RPV steel) to withstand crack damage propagation, including in accidental situations. That capacity is strongly influenced by the irradiation dose accumulation and inherent characteristics of the microstructure of the RPV steel, including its grain size distribution. These characteristics also include initial material defects like particles and chemical composition heterogeneities of various types, such as segregated solute elements. The fracture response of RPV steels is usually evaluated by means of conventional fracture tests, typically toughness tests and/or Charpy impact tests. These tests measure respectively the critical load to fracture and the energy absorbed during the fracture process. During the Charpy impact test a hammer is placed at an end of a rigid pendulum which is rotating around its other end. The pendulum is released from an initial height so that the hammer impacts a notched specimen placed at the bottom of its trajectory. After breaking the specimen, the pendulum continues to rotate until the hammer reaches its final height. The difference of height between the initial and final positions of the hammer, multiplied by {mg}, where m is the hammer mass and g the gravity acceleration, gives the energy required to fracture the specimen. This fracture energy generally varies with the test temperature. The curve {fracture energy vs. temperature} of an RPV steel exhibits a well-defined transition from high energy to low energy as temperature decreases. This transition occurs over a definite range of temperature around a temperature called the "Ductile to Brittle Transition Temperature" or DBTT. Below the DBTT the RPV steel exhibits a brittle fracture behavior with little energy required for fracture (this energy remains sensibly constant) and above the DBTT the RPV steel exhibits a ductile fracture behavior with higher energy required for fracture (this energy remains sensibly constant). Figure 6 shows a typical Charpy impact test results with the DBTT for a RPV steel.

RPV are exposed to radiation during all their lifetime, and accumulate radiation damage at the grain size and sub-grain levels. This damage is more severe with increased exposure to radiation, namely the radiation dose amount. Now it has been generally observed that irradiated RPV steels exhibit a positive shift $\Delta T$ (i.e. toward higher temperatures) in the DBTT compared to unirradiated RPV steels (this temperature shift $\Delta T$ is typically measured at a given energy on the curve). This shift is called the dose-dependent shift of the DBTT. The amplitude of this temperature shift $\Delta T$ increases with the radiation dose amount. Therefore, the measure of the temperature shift $\Delta T$ of a RPV steel allows making a safety assessment of this specific RPV after a certain amount of operational time or cumulated radiation dose. As an example, Figure 6 shows the temperature shift $\Delta T$ of a RPV steel (A508-gr3), where the solid curve C1 corresponds to the unirradiated RPV steel and the dashed curve C2 corresponds to the same RPV steel irradiated with neutrons at a dose of 1020 n/cm2 (or 0.15 dpa). The DBTT shift $\Delta T$ is 68°C (measured at absorbed impact energy of 41 Joules).

In the nuclear industry, conventional fracture tests are commonly carried out periodically as requested by the Nuclear Safety Regulators (in France, this is based on the following regulations: *"Arrêté du 26 février 1974; Arrêté "Exploitation" CPP/CSP du 10 novembre 1999"),* on macroscopic surveillance specimens representative of the inspected RPV. In practice, those specimens are inserted in the RPV at the onset of the nuclear power plant lifetime, in adapted surveillance capsules. The conventional RPV steel surveillance procedures are highly standardized, following the recommendations of the National Safety Authorities of many different countries. Such approach however suffers from a number of serious shortcomings:

-    Fracture toughness and Charpy impact tests are destructive. The failed, post-irradiated specimens are handled in hot cell facilities and then disposed of as radioactive waste.
-    The standardized surveillance specimens are relatively large in size (tens of cm). Since the reactor inner space is limited, so is the number of test specimens inserted in surveillance capsules and hence, the number of different testing conditions to be investigated, throughout the nuclear power plant lifetime.
-    The time gap between two consecutive test campaigns typically amounts to two to three years, depending on the applicable safety standard, in order to save test specimens for the whole nuclear power plant lifetime. As a result, conventional surveillance approaches have little flexibility. In other words, no RPV fracture response information is available between two consecutive testing series, while significant material damage may occur due to unforeseen temperature, load or sharp dose variations.
-    Standardized surveillance specimens generally do not capture the significant, initial and post-irradiation microstructure variations existing in thick-walled RPV components. These variations notably include segregated zones corresponding to local chemical composition variations and highly complex weld joints sections.
-    The conventional fracture test results significantly vary from one test to another, even if using exactly the same testing conditions (test temperature, strain rate, impact energy). The origin of this variability depends on various physical mechanisms that cannot be understood solely based on the examination of the failed specimens, given their size and limited numbers.

## Description of the invention

The present invention aims to address these shortcomings.

The invention aims to propose a method for the assessment of the irradiation damage in nuclear reactor pressure vessels which leads to accurate and better informed conclusions regarding the RPV remaining lifetime.

This goal is reached thanks to the fact that the method comprises the following steps:

(a) Cutting at least a specimen at a location on an un-irradiated reactor pressure vessel and obtaining the reference yield stress at room temperature $\sigma°$ of the un-irradiated material of each specimen;

(b) For each specimen, generating a grain size and crystallographic orientation map of a region of the specimen and measuring grain size $D_g$ of each grain of this region;

(c) For each specimen, performing on this region several indentation tests at a given temperature with an indenter and measuring indentation load P as a function of indentation depth h from this indentation test, then calculating indentation coefficient $C_\theta$ from equation (1), wherein equation (1) is:

$$P = C_\theta \cdot h^2 \quad (1)$$

(d) For each specimen, and on each test, calculating a representative stress level $\sigma_{r\theta}$ and a representative strain level $\varepsilon_{r\theta}$ from equations (2) and (3) by inputting indentation coefficient Ce determined at step (c), indenter aperture angle $\theta$ and bulk modulus E of the material of the specimen, wherein equations (2) and (3) are:

$$\frac{C_\theta}{\sigma_{r\theta}} = \tan^2 \theta \left\{ \frac{2.552}{100} \left[\ln\left(\frac{E}{\sigma_{r\theta}}\right)\right]^3 - \frac{72.526}{100} \left[\ln\left(\frac{E}{\sigma_{r\theta}}\right)\right]^2 + \frac{634.493}{100} \left[\ln\left(\frac{E}{\sigma_{r\theta}}\right)\right] - \frac{647.458}{100} \right\} \quad (2)$$

$$\varepsilon_{r\theta} = 0.105 \cot \theta \quad (3)$$

(e) For each specimen, and on each test, calculating the effective work hardening rate $\Delta\tau_{app}/\Delta\gamma_p$ from equation (4) by inputting the representative stress level $\sigma_{r\theta}$ and the representative strain level $\varepsilon_{r\theta}$ determined at step (d), and the reference yield stress at room temperature of the un-irradiated material of said specimen $\sigma°$ determined at step (a), wherein equation (4) is

$$\frac{\Delta\tau_{app}}{\Delta\gamma_p} = \frac{(\sigma_{r\theta} - \sigma°)}{(\varepsilon_{r\theta} - 2\cdot10^3)} \quad (4)$$

(f) For each specimen, and on each test, calculating for each grain of the region (mapped at step (b) the number of slip bands N from equation (5) by inputting the effective work hardening rate $\Delta\tau_{app}/\Delta\gamma_p$ determined at step (e), the grain size $D_g$ of this grain measured at step (b), Poisson's ration v and shear modulus $\mu$ of the material of the specimen, internal stress field amplitude dislocation coefficient k, grain geometry parameter S and Burgers vector magnitude b, wherein equation (5) is:

$$\frac{\Delta\tau_{app}}{\Delta\gamma_p} = \frac{\mu}{S(1-v)} \left[ \frac{1 + exp\left(-k\frac{D_g}{N\sqrt{b\,D_g/\Delta\gamma_p}}\right)}{2 + (N-2)\left(1 - exp\left(-k\frac{D_g}{N\sqrt{b\,D_g/\Delta\gamma_p}}\right)\right)} \right] \quad (5)$$

(g) For each specimen, and on each test, calculating for each grain of the region (mapped at step (b) the slip band number density $N/D_g$ from the number of slip bands N determined at step (f) and the grain size $D_g$ of this grain measured at step (b);

(h) Repeating steps (c) to (g) at different temperatures $T_m$ with $M \geq 3$ and $1 \leq m \leq M$ such that the ductile/brittle transition temperature of the material of the specimen is between $T_1$ and $T_M$, to obtain an un-irradiated curve $C_{unirr}$ which is the variation of slip band number density $(N/D_g)$ as a function of temperature for the un-irradiated specimen ;

(i) Submitting at least one of specimens to a given irradiation dose and repeating steps (b) to (g) at different temperatures $T'_r$ with $R \geq 3$ and $1 \leq r \leq R$ to obtain an irradiated curve $C_{irrad}$ which is the variation of slip band number density ($N/D_g$) as a function of temperature for the irradiated specimen ;

(j) Estimating the ductile to brittle transition shift at the irradiation dose as being equal to the temperature shift $\Delta T$ between the irradiated curve $C_{irrad}$ and the un-irradiated curve $C_{unirr}$;

(k) Assessing the irradiation damage in said nuclear reactor pressure vessel at the irradiation dose as a function of the ductile to brittle transition shift $\Delta T$.

Thanks to these features and notably that micro-indentation tests are (quasi) non-destructive, specimens are reusable up to several hundred times, thereby minimizing the amount of radio-active material to handle and dispose of. The method of the invention allows testing costs to be significantly reduced compared to methods using Charpy specimens.

For example, at step (h), a specimen is the same at all test temperatures.

For example, at step (i), a specimen is the same at all test temperatures.

For example, at step (i), a specimen submitted to a given irradiation dose is the same as an un-irradiated specimen and only steps (c) to (g) are repeated.

For example, at step (i), a specimen submitted to any irradiation dose is the same.

For example, the maximum dimension of the specimen(s) is less than 1 centimeter.

For example, the specimen(s) are disk-shaped.

Consequently, a reactor pressure vessel can accommodate a large number of specimens, so that specimen handling need not necessarily be carried out in dedicated hot cell facilities, which facilitates the testing data collection and makes it highly cost-effective. Specimens plausibly capture all the critical microstructure variations existing in RPV steel. This notably include the welded sections, a most complex, critical and yet poorly understood aspect of structural component lifetime management. The large number of specimens allows thorough investigation of the fracture-controlling mechanisms. Statistical aspects of the fracture response are thus naturally accounted for, and the fracture response variability causes can be better analyzed. Furthermore, thanks to the large number of specimens, the time gap between two consecutive test campaigns can be adjusted on demand. Data on RPV fracture response is available at all time, for better reliability.

For example, the specimen(s) is disk-shaped.

The invention also comprises a computer-implemented method of assessing the irradiation embrittlement in a nuclear reactor pressure vessel, comprising:

(a) Receiving data representing the reference yield stress at room temperature $\sigma°$ of the un-irradiated material of each specimen at a location on the un-irradiated reactor pressure vessel;

(b) For each specimen, receiving data representing the grain size $D_g$ of each grain of a region of the specimen wherein a grain size and crystallographic orientation map of a region has been generated;

(c) For each specimen, receiving data representing the indentation load P and data representing the indentation depth h from each of several indentation tests performed on said region at a given temperature T with an indenter, and calculating indentation coefficient Ce from equation (1) by inputting this data, wherein equation (1) is:

$$P = C_\theta \cdot h^2 \quad (1)$$

(d) For each specimen, and on each test, receiving data representing indentation coefficient Ce, data representing indenter aperture angle $\theta$ and data representing bulk modulus E of the material of the specimen, and calculating a representative stress level $\sigma_{r\theta}$ and a representative strain level $\varepsilon_{r\theta}$ from equations (2) and (3) by inputting this data, wherein equations (2) and (3) are:

$$\frac{C_\theta}{\sigma_{r\theta}} = \tan^2 \theta \left\{ \frac{2.552}{100} \left[\ln\left(\frac{E}{\sigma_{r\theta}}\right)\right]^3 - \frac{72.526}{100} \left[\ln\left(\frac{E}{\sigma_{r\theta}}\right)\right]^2 + \frac{634.493}{100} \left[\ln\left(\frac{E}{\sigma_{r\theta}}\right)\right] - \frac{647.458}{100} \right\} \quad (2)$$

$$\varepsilon_{r\theta} = 0.105 \cot \theta \quad (3)$$

(e) For each specimen, and on each test, receiving data representing the representative stress level $\sigma_{r\theta}$ and data representing the representative strain level $\varepsilon_{r\theta}$, and data representing the reference yield stress at room temperature of the un-irradiated material of the specimen $\sigma°$, and calculating the effective work hardening rate ($\Delta\tau_{app}/\Delta\gamma_p$) from equation (4) by inputting this data, wherein equation (4) is

EP 4 760 749 A1

$$\frac{\Delta \tau_{app}}{\Delta \gamma_p} = \frac{(\sigma_{r\theta} - \sigma^\circ)}{(\varepsilon_{r\theta} - 2 \cdot 10^3)} \quad (4)$$

(f) For each specimen, and on each test, and for each grain of the region, receiving data representing the effective work hardening rate ($\Delta \tau_{app}/\Delta \gamma_p$), data representing the grain size $D_g$ of the grain, data representing Poisson's ration v and shear modulus $\mu$ of the material of the specimen, data representing internal stress field amplitude dislocation coefficient k, data representing the grain geometry parameter S and data representing Burgers vector magnitude b, and calculating for each grain the number of slip bands N from equation (5) by inputting this data, wherein equation (5) is:

$$\frac{\Delta \tau_{app}}{\Delta \gamma_p} = \frac{\mu}{S(1-\nu)} \left[ \frac{1 + exp\left(-k\frac{D_g}{N\sqrt{b\,D_g/\Delta\gamma_p}}\right)}{2 + (N-2)\left(1 - exp\left(-k\frac{D_g}{N\sqrt{b\,D_g/\Delta\gamma_p}}\right)\right)} \right] \quad (5)$$

(g) For each specimen, and on each test, and for each grain of the region, receiving data representing the number of slip bands N and data representing the grain size $D_g$ of each grain, and calculating for each grain the slip band number density ($N/D_g$) by inputting the data;

(h) Receiving data representing the ductile/brittle transition temperature of the material of the specimen, and repeating steps (c) to (g) at different temperatures $T_m$ with M ≥ 3 and 1 ≤ m ≤ M such that the ductile/brittle transition temperature of the material of the specimen is between $T_1$ and $T_M$, in order to calculate the slip band number density ($N/D_g$) at each temperature $T_m$ for the un-irradiated specimen, and obtaining an un-irradiated curve $C_{unirr}$ which is the variation of slip band number density ($N/D_g$) as a function of temperature for the un-irradiated specimen;

(i) Repeating steps (b) to (g) at different temperatures $T'_r$ with R ≥ 3 and 1 ≤ r ≤ R for the specimen submitted to a given irradiation dose in order to calculate the slip band number density ($N/D_g$) at each temperature $T'_r$ for the irradiated specimen, and obtaining an irradiated curve $C_{irrad}$ which is the variation of slip band number density ($N/D_g$) as a function of temperature for the irradiated specimen;

(j) Estimating the ductile to brittle transition shift at the irradiation dose as being equal to the temperature shift $\Delta T$ between the irradiated curve ($C_{irrad}$) and the un-irradiated curve ($C_{unirr}$).

The invention also comprises a data processing apparatus comprising means for carrying out the computer-implemented method according to the invention.

The invention also comprises a computer program comprising instructions which, when the program is executed by a computer, cause the computer to carry out the computer-implemented method according to the invention.

The invention also comprises a computer-readable medium having stored thereon the computer program according to the invention.

The invention will be well understood and its advantages better revealed upon reading the following detailed description of embodiments which are given as non-limitative examples. The description refers to enclosed drawings where:

[Fig. 1] Figure 1 is a flow diagram of the steps of the method according to the invention.

[Fig. 2] Figure 2 is a drawing illustrating a pressure vessel reactor, specimens taken from this reactor and grains orientation map obtained with the method according to the invention.

[Fig. 3] Figure 3 is a drawing illustrating the indentation test of a specimen used in the method according to the invention, and the indent-induced plastic zone.

[Fig. 4] Figure 4 is a graph showing the load versus the penetration depth curves in the indentation test of Figure 3, at two irradiation levels.

[Fig. 5] Figure 5 is a graph showing slip band number density vs. temperature curves for an unirradiated and an irradiated RPV steels obtained with the method according to the invention.

[Fig. 6] Figure 6, already described, graph showing energy vs. temperature curves from Charpy impact tests for an unirradiated and an irradiated RPV steel.

## Detailed description

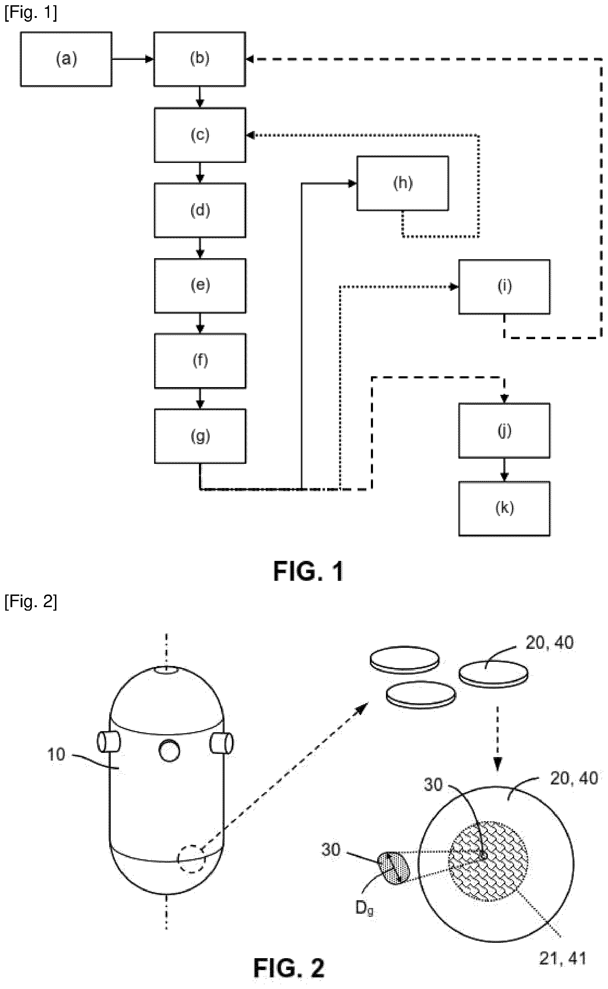

The method for the assessment of the irradiation damage in a nuclear reactor pressure vessel (or RPV) 10 is outlined in Figure 1, and the steps of the method are described below. An example of a RPV is sketched in Figure 2.

In step (a), at least one (ideally several) specimen (20, 40) is cut from an un-irradiated RPV 10 at a location. Advantageously, the maximum dimension of a specimen (20, 40) is less than 1 cm, for example less than 5 mm. Ideally, the size of each specimen is small enough to be entirely in a representative zone of the RPV. Such a representative zone can be the heat affected zone (or HAV) or the fused zone of a weld. Advantageously, each specimen is a disk, for example with a diameter less than 1 cm, for example less than 5 mm, for example less than 3 mm and with a thickness less than 1 mm, for example less than 0.5 mm, for example less than 0.2 mm, for example less than 0.1 mm. Disk-shaped specimens (20, 40) can be easily cut with a tool and stored with a minimum volume, which takes less space in RPV 10. Such disk-shaped specimens (20, 40) cut from RPV 10 are illustrated in Figure 2. This cutting process may be repeated at several locations on the RPV 10 when it is planned that several zones of the RPV are treated. The reference yield stress at room temperature $\sigma°$ of the un-irradiated material of each specimen (20, 40) is then obtained, either from the available literature, or from experiments.

In step (b), a region (21, 41) on each said specimen (20, 40) is selected, and a grain size and crystallographic orientation map of region (21, 41) is generated. This map reveals the shape and crystallographic orientation of each grain 30 of region (21, 41). Such a map is illustrated schematically in Figure 2 for a region (21, 41) of a specimen (20, 40), and shows grains 30. This map is generated in a known manner after specimen (20, 40) preparation and polishing. For instance, this generation is done using Electron Backscatter Diffraction (or EBSD) analysis in region (21, 41). Region (21, 41) is large enough to contain a statistically significant number of grains 30. For example, region (21, 41) contains more than a hundred grains, for example several hundred grains. The crystallographic orientation and type (Body Centered Cubic BCC, Face Centered Cubic FCC) of each grain 30 of region (21, 41) are identified. The grain size $D_g$ of each grain 30 of region (21, 41) is measured. For instance, grain size $D_g$ of a grain 30 is the largest dimension of this grain 30, as illustrated on Figure 2 for a grain 30 of region (21, 41).

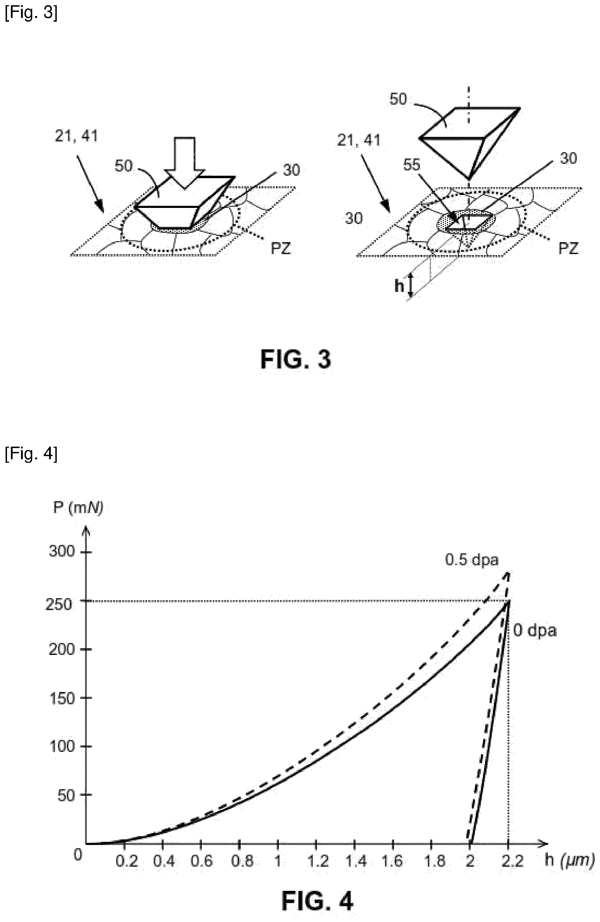

In step (c), for each specimen (20, 40) on region (21, 41), several indentation tests are performed at a given temperature T. The indentation tests are performed according to a known procedure by pressing an indenter 50 (for instance a pyramid-shaped indenter) under a load P on region (21, 41) such that the indenter 50 penetrates the surface by a depth h. Figure 3 shows such an indentation test. The left-hand side of Figure 3 shows the indenter 50 during penetration of region (21, 41). The right-hand side of Figure 3 shows the indenter pit 55 left in region (21, 41) after penetration. The indenter pit 55 may extend beyond the grain 30 on which the tip of the indenter 50 was located. Depth h is the depth of pit 55 measured perpendicularly to the surface of grain 30. The indentation creates an indenter-induced plastic zone "PZ" around indenter pit 55. Ideally, indentation depth h is large enough so that the indenter-induced plastic zone PZ comprises several grains. This plastic zone PZ is shown schematically in dotted line on Figure 3. In typical RPV steels, the minimal indentation depth h ranges between 1-4 $\mu$m. The penetration of indenter 50 is pursued, and curve P = f(h) of the indentation load P as a function of indentation depth h is plotted. Figure 4 is a graph showing the load P versus the penetration depth h curve obtained in the indentation test of Figure 3 at a temperature of - 20°C (solid line). The maximum load P is 0.25 N and maximum depth h is 2.2 $\mu$m. The curve P = f(h) has roughly a parabolic shape and can therefore be fitted by parabolic equation (1) below, where Ce is an indentation coefficient. The indentation coefficient $C_\theta$ for this grain 30 is then known. Equation (1) is:

$$P = C_\theta \cdot h^2 \quad (1)$$

As stated above, region (21, 41) contains a large number of grains 30, typically more than one hundred. The number of indentation tests performed on region (21, 41) is lower than this number of grains 30. Typically the ratio of the number of tests to the number of grains 30 in region (21, 41) is around one hundredth or less. This ratio is sufficient to obtain a correct statistical representation of the plastic strain response of region (21, 41). Indeed, each indentation test gives a parabolic curve using equation (1), and all these curves are different and are distributed (spread) in a load P vs. depth h diagram. The inventors have found that at such a ratio the spread of these parabolic curves is statistically wide enough. In other words, increasing the number of indentation tests over a given region (21, 41) does not give parabolic curves located beyond the spread of the parabolic curves already obtained with the above ratio. Altogether, for a given region (21, 41), the number of N values obtained at step (f) and the number of $N/D_g$ values obtained at step (g) (see below) are each equal to the number of grains 30 in this region times the number of indentation tests performed on that region (21, 41). For instance, the inventors have performed twelve indentation tests over a region (21, 41) containing six hundred grains 30, giving 7200 values for $N/D_g$.

In step (d), for each specimen (20, 40) and for each test of step (c), a representative stress level $\sigma_{r\theta}$ and a representative strain level $\varepsilon_{r\theta}$ are calculated from equations (2) and (3) by inputting indentation coefficient Ce, indenter 50 aperture angle $\theta$ and bulk modulus E* of the material of specimen (20, 40). The indenter 50 aperture angle $\theta$ is measured on the indenter. Bulk modulus E* is obtained from the unloading part of the P = f(h) curve on Figure 4. Alternatively, bulk modulus E* is obtained from other experiments, or from the available literature. Equations (2) and (3) are given in an article of the Journal of Applied Physics (pp.132, 175107, year 2022) and are:

$$\frac{c_\theta}{\sigma_{r\theta}} = \tan^2 \theta \left\{ A_1 \left[ \ln \left( \frac{E*}{\sigma_{r\theta}} \right) \right]^3 - A_2 \left[ \ln \left( \frac{E*}{\sigma_{r\theta}} \right) \right]^2 + A_3 \left[ \ln \left( \frac{E*}{\sigma_{r\theta}} \right) \right] - A_4 \right\} \quad (2)$$

$$\varepsilon_{r\theta} = A_5 \cot \theta \quad (3)$$

Constants $A_1$, $A_2$, $A_3$ and $A_4$ are: $A_1$ = 0.02552, $A_2$ = 0.72526, $A_3$ = 6.34493, $A_4$ = 6.47458 and $A_5$ = 0.105.

In step (e), for each specimen (20, 40) and for each test, the effective work hardening rate $\Delta\tau_{app}/\Delta\gamma_p$ is calculated. Unexpectedly, experiments conducted by the inventors have shown that the effective work hardening rate $\Delta\tau_{app}/\Delta\gamma_p$ may be calculated from equation (4) by inputting the representative stress level $\sigma_{r\theta}$ and the representative strain level $\varepsilon_{r\theta}$ calculated at step (d), and the reference yield stress $\sigma°$ at room temperature of the un-irradiated material of the specimen 20 determined at step (a). Reference yield stress $\sigma°$ is obtained either from the available literature, or from experiments. Equation (4) is

$$\frac{\Delta\tau_{app}}{\Delta\gamma_p} = \frac{(\sigma_{r\theta} - \sigma°)}{(\varepsilon_{r\theta} - 2\cdot10^3)} \quad (4)$$

In step (f), for each specimen (20, 40) and for each test, the number of slip bands N in each grain 30 of region (21, 41) is calculated from equation (5) by inputting the effective work hardening rate $\Delta\tau_{app}/\Delta\gamma_p$ determined at step (d), the grain size $D_g$ of this grain 30 measured and calculated at step (b), Poisson's ration v and shear modulus $\mu$ of the material of specimen (20, 40), internal stress field amplitude dislocation coefficient k, grain geometry parameter S and Burgers vector magnitude b. Poisson's ration v and shear modulus $\mu$ are obtained either from the available literature, or from experiments. Equation (5) takes into account plasticity deformation in the specimen. Internal stress field amplitude dislocation coefficient k takes into account dislocations build-up and crystallographic structure and is experimentally determined as equal to 5 for FCC materials and 1.75 for BCC materials. Grain shape factor parameter S and Burgers vector magnitude b are found in materials handbooks. For instance, for some RPV steels, S = 0.66 and b = 2.5-10^{-10} m. Equation (5) is given in an article of the Journal of Nuclear Materials (pp.559, 153417, year 2022) and is:

$$\frac{\Delta\tau_{app}}{\Delta\gamma_p} = \frac{\mu}{S(1-v)} \left[ \frac{1 + exp\left( -k\frac{D_g}{N\sqrt{b\,D_g/\Delta\gamma_p}} \right)}{2 + (N-2)\left( 1 - exp\left( -k\frac{D_g}{N\sqrt{b\,D_g/\Delta\gamma_p}} \right) \right)} \right] \quad (5)$$

In step (g), for each specimen (20, 40), and for each test, the slip band number density $N/D_g$ is calculated in each grain 30 from the number of slip bands N determined at step (f) and the representative grain size $D_g$ measured and calculated at step (b).

In step (h), steps (c) to (g) are repeated at different temperatures $T_m$ with M $\geq$ 3 and 1 $\leq$ m $\leq$ M for specimen 20. All temperatures $T_m$ are between a minimum temperature $T_1$ and maximum temperature $T_M$. Maximum temperature $T_M$ is lower than the targeted irradiation temperature. For instance, the interval between any two adjacent temperatures is constant. Iteration is stopped when the ductile/brittle transition temperature (DBTT) of the material of specimen 20 is between minimum temperature $T_1$ and maximum temperature $T_M$. The DBTT is estimated from experiments, for instance from Charpy impact tests. Alternatively, tests are performed between $T_1$ = -100°C and $T_M$ = 0°C for un-irradiated specimens 20 so as to include the DBTT. The variation of slip band number density $N/D_g$ as a function of temperature T for un-irradiated specimen 20 is plotted as a curve $C_{unirr}$ which is the un-irradiated curve of specimen 20. This curve $C_{unirr}$

is plotted using one of known best-fit algorithms, as shown on Figure 5 (data points are black circles and the curve $C_{unirr}$ is a solid line). Measurements made on several specimens 20 allow to have several data points. This allows a more accurate plotting of un-irradiated curve $C_{unirr}$. For a given specimen 20, all the values of slip band number density $N/D_g$ obtained at step (g) are used, which allows an even more accurate plotting of un-irradiated curve $C_{unirr}$. This spread in values is illustrated by vertical bars around the median value (black circle) at a given temperature.

At step (h), in order to reduce the number of specimens, the same un-irradiated specimen 20 may be set at several temperatures, possibly all temperatures, and put through steps (c) to (g), by performing indentation at virgin (untested) locations on the specimen's surface.

In step (i), at least one specimen 40 is submitted to a given irradiation dose. Then steps (b) to (g) are repeated at different temperatures ($T'_r$) with $R \geq 3$ and $1 \leq r \leq R$. All temperatures $T'_r$ are between a minimum temperature $T'_1$ and maximum temperature $T'_R$. For instance, the interval between any two adjacent temperatures is constant. Iteration is stopped when the ductile/brittle transition temperature (DBTT) of the material of specimen 40 is between minimum temperature $T'_1$ and maximum temperature $T'_R$. Tests are performed between $T'_1 = 0°C$ and $T'_R = 100°C$ for irradiated specimens 40 so as to include the DBTT. At step (b), the indentation test curve also has a parabolic shape, like in the un-irradiated case, as shown in Figure 4: the dotted line is the $P = f(h)$ curve obtained at an irradiation level of 0.5 dpa and at the same temperature (-20°C) than in the un-irradiated case. Finally, one obtains an irradiated curve $C_{irrad}$ which is the variation of slip band number density $N/D_g$ as a function of temperature at the given radiation dose. This curve $C_{irrad}$ is plotted using one of known best-fit algorithms, as shown on Figure 5 (data points are white circles and the curve $C_{irrad}$ is a dashed line).

At step (i), in order to reduce the number of specimens, the same irradiated specimen 40 may be set at several temperatures, possibly all temperatures, and put through steps (c) to (g), by performing indentation at virgin locations on the specimen's surface.

The specimen 40 irradiated at step (i) may be the same or different than an un-irradiated specimen 20. In the case where irradiated specimen (or specimens) 40 and un-irradiated specimen (or specimens) 20 are the same, step (b) does not need to be repeated. In order to irradiate specimens 40, these specimens 40 are conveniently placed inside the RPV 10, or in any place with a similar irradiation environment.

In step (j), the ductile to brittle transition shift at the first radiation dose is estimated as being equal to the temperature shift $\Delta T$ between the irradiated curve $C_{irrad}$ obtained at step (i) and the un-irradiated curve $C_{unirr}$ obtained at step (i). The temperature shift $\Delta T$ is typically measured at a given value of slip band number density $N/D_g$ on the curves. As observed by the inventors, the above temperature shift $\Delta T$ scales with the shift $\Delta T$ obtained from fracture toughness transition test curves, which establishes the reliability of the method of the invention.

In step (k), the irradiation damage in the RPV 10 at the first radiation dose is estimated as a function of the above ductile to brittle transition shift. In other words, the ductile to brittle transition shift provides a reliable estimate of the amount of damage accumulated in the steel making up RPV 10 at the first radiation dose.

Step (i) is repeated at one or several higher irradiation doses than the first radiation dose, typically at various times in the future in the situation where RPV 10 remains under radiation. For example, these times are separated by constant intervals. Also, testing campaigns may be done as frequently as necessary in order to assess the irradiation damage of the RPV. Furthermore, the small size of the specimens (20, 40) allows several hundreds of specimens (20, 40) to be placed in the RPV 10. Consequently, a large number of specimens (20, 40) may be tested, which increases the reliability of the assessment of irradiation damage at any given irradiation dose. As a result, the method according to the invention allows a reliable assessment of the damage over time in RPV 10 under irradiation. This allows to decide at which moment the RPV 10 should be replaced before a failure event occurs.

Steps of the above method are shown on Figure 1, with arrows between the steps given the order of the steps. The road from step (h) to step (c) and from step (g) to step (i) is shown as a dotted line, and the road from step (i) to step (b) (or possibly to step (c), not illustrated) and from step (g) to step (j) is shown as a dashed line, for the sake of clarity.

The invention also comprises a computer-implemented method of assessing the irradiation embrittlement in a nuclear reactor pressure vessel 10, wherein, at each of the above steps, relevant data is received, and desired data is calculated using equations (1) to (5). The invention also comprises a data processing apparatus, such as a computer, comprising means for carrying out this computer-implemented method. The invention also comprises a computer program comprising instructions which, when the program is executed by a computer, cause the computer to carry out this computer-implemented method. The invention also comprises a computer-readable medium on which is stored this computer program.

## Claims

1. Method for the assessment of the irradiation embrittlement in a nuclear reactor pressure vessel (10) **characterized in that** it comprises the following steps:

(a) Cutting at least a specimen (20, 40) at a location on an un-irradiated reactor pressure vessel (10) and obtaining the reference yield stress at room temperature ($\sigma°$) of the un-irradiated material of each of said specimen (20, 40);

(b) For each said specimen (20, 40), generating a grain size and crystallographic orientation map of a region (21, 41) of said specimen (20, 40) and measuring grain size ($D_g$) of each grain (30) of said region (21, 41);

(c) For each said specimen (20, 40), performing on said region (21, 41) several indentation tests at a given temperature (T) with an indenter (50) and measuring indentation load (P) as a function of indentation depth (h) from said indentation test, then calculating indentation coefficient (Ce) from equation (1), wherein equation (1) is:

$$P = C_\theta \cdot h^2 \quad (1)$$

(d) For each said specimen (20, 40), and on each said test, calculating a representative stress level ($\sigma_{r\theta}$) and a representative strain level ($\varepsilon_{r\theta}$) from equations (2) and (3) by inputting indentation coefficient (Ce) determined at step (c), said indenter (50) aperture angle ($\theta$) and bulk modulus (E) of the material of said specimen (20, 40), wherein equations (2) and (3) are:

$$\frac{c_\theta}{\sigma_{r\theta}} = \tan^2\theta \left\{ \frac{2.552}{100} \left[ \ln\left(\frac{E}{\sigma_{r\theta}}\right) \right]^3 - \frac{72.526}{100} \left[ \ln\left(\frac{E}{\sigma_{r\theta}}\right) \right]^2 + \frac{634.493}{100} \left[ \ln\left(\frac{E}{\sigma_{r\theta}}\right) \right] - \frac{647.458}{100} \right\} \quad (2)$$

$$\varepsilon_{r\theta} = 0.105 \cot\theta \quad (3)$$

(e) For each said specimen (20, 40), and on each said test, calculating the effective work hardening rate ($\Delta\tau_{app}/\Delta\gamma_p$) from equation (4) by inputting the representative stress level ($\sigma_{r\theta}$) and the representative strain level ($\varepsilon_{r\theta}$) determined at step (d), and the reference yield stress at room temperature of the un-irradiated material of said specimen ($\sigma°$) determined at step (a), wherein equation (4) is

$$\frac{\Delta\tau_{app}}{\Delta\gamma_p} = \frac{(\sigma_{r\theta} - \sigma°)}{(\varepsilon_{r\theta} - 2\cdot10^3)} \quad (4)$$

(f) For each said specimen (20, 40), and on each said test, calculating for each grain (30) of said region (21, 41) the number of slip bands N from equation (5) by inputting the effective work hardening rate ($\Delta\tau_{app}/\Delta\gamma_p$) determined at step (e), the grain size ($D_g$) of said grain (30) measured at step (b), Poisson's ration (v) and shear modulus ($\mu$) of the material of said specimen (20, 40), internal stress field amplitude dislocation coefficient (k), grain geometry parameter (S) and Burgers vector magnitude (b), wherein equation (5) is:

$$\frac{\Delta\tau_{app}}{\Delta\gamma_p} = \frac{\mu}{S(1-v)} \left[ \frac{1 + exp\left(-k\dfrac{D_g}{N\sqrt{bD_g/\Delta\gamma_p}}\right)}{2 + (N-2)\left(1 - exp\left(-k\dfrac{D_g}{N\sqrt{bD_g/\Delta\gamma_p}}\right)\right)} \right] \quad (5)$$

(g) For each said specimen (20, 40), and on each said test, calculating for each grain (30) of said region (21, 41) the slip band number density ($N/D_g$) from the number of slip bands (N) determined at step (f) and the grain size ($D_g$) of said grain (30) measured at step (b);

(h) Repeating steps (c) to (g) at different temperatures ($T_m$) with $M \geq 3$ and $1 \leq m \leq M$ such that the ductile/brittle transition temperature of the material of said specimen (20) is between $T_1$ and $T_M$ to obtain an un-irradiated curve ($C_{unirr}$) which is the variation of slip band number density ($N/D_g$) as a function of temperature for said un-irradiated specimen (20) ;

(i) Submitting at least one of said specimen (40) to a given irradiation dose and repeating steps (b) to (g) at different temperatures ($T'_r$) with $R \geq 3$ and $1 \leq r \leq R$ to obtain an irradiated curve ($C_{irrad}$) which is the variation of slip band number density ($N/D_g$) as a function of temperature for said irradiated specimen (40);

(j) Estimating the ductile to brittle transition shift at said irradiation dose as being equal to the temperature shift ($\Delta T$) between said irradiated curve ($C_{irrad}$) and the un-irradiated curve ($C_{unirr}$);

(k) Assessing the irradiation damage in said nuclear reactor pressure vessel (10) at said irradiation dose as a function of said ductile to brittle transition shift ($\Delta T$).

2. Method according to claim 1 wherein, at step (h), said specimen (20) is the same at all said test temperatures ($T_m$).

3. Method according to claim 1 or 2 wherein, at step (i), said specimen (40) is the same at all test temperatures ($T'_r$).

4. Method according to any one of claims 1 to 3 wherein, at step (i), said specimen (40) submitted to a given irradiation dose are the same as said un-irradiated specimen (20) and only steps (c) to (g) are repeated.

5. Method according to claim 4 wherein at step (i), said specimens (40) submitted to any irradiation dose are the same.

6. Method according to any one of claims 1 to 5 wherein the maximum dimension of said at least one specimen (20, 40) is less than 1 centimeter.

7. Method according to any one of claims 1 to 6 wherein said at least one specimen (20) is disk-shaped.

8. Computer-implemented method of assessing the irradiation embrittlement in a nuclear reactor pressure vessel (10), comprising:

(a) Receiving data representing the reference yield stress at room temperature ($\sigma°$) of the un-irradiated material of each specimen (20, 40) at a location on said un-irradiated reactor pressure vessel (10);
(b) For each said specimen (20, 40), receiving data representing the grain size ($D_g$) of each grain (30) of a region (21, 41) of said specimen (20, 40) wherein a grain size and crystallographic orientation map of a region (21, 41) has been generated;
(c) For each said specimen (20, 40), receiving data representing the indentation load (P) and data representing the indentation depth (h) from each of several indentation tests performed on said region (21, 41) at a given temperature (T) with an indenter (50), and calculating indentation coefficient (Ce) from equation (1) by inputting said data, wherein equation (1) is:

$$P = C_\theta \cdot h^2 \quad (1)$$

(d) For each said specimen (20, 40), and on each said test, receiving data representing said indentation coefficient (Ce), data representing said indenter (50) aperture angle ($\theta$) and data representing bulk modulus (E) of the material of said specimen (20, 40), and calculating a representative stress level ($\sigma_{r\theta}$) and a representative strain level ($\varepsilon_{r\theta}$) from equations (2) and (3) by inputting said data, wherein equations (2) and (3) are:

$$\frac{c_\theta}{\sigma_{r\theta}} = \tan^2\theta \left\{ \frac{2.552}{100}\left[\ln\left(\frac{E}{\sigma_{r\theta}}\right)\right]^3 - \frac{72.526}{100}\left[\ln\left(\frac{E}{\sigma_{r\theta}}\right)\right]^2 + \frac{634.493}{100}\left[\ln\left(\frac{E}{\sigma_{r\theta}}\right)\right] - \frac{647.458}{100} \right\} \quad (2)$$

$$\varepsilon_{r\theta} = 0.105 \cot\theta \quad (3)$$

(e) For each said specimen (20, 40), and on each said test, receiving data representing said representative stress level ($\sigma_{r\theta}$) and data representing said representative strain level ($\varepsilon_{r\theta}$), and data representing said reference yield stress at room temperature of the un-irradiated material of said specimen ($\sigma°$), and calculating the effective work hardening rate ($\Delta\tau_{app}/\Delta\gamma_p$) from equation (4) by inputting said data, wherein equation (4) is

$$\frac{\Delta\tau_{app}}{\Delta\gamma_p} = \frac{(\sigma_{r\theta} - \sigma°)}{(\varepsilon_{r\theta} - 2\cdot10^3)} \quad (4)$$

(f) For each said specimen (20, 40), and on each said test, and for each grain of said region (21, 41), receiving data representing said effective work hardening rate ($\Delta\tau_{app}/\Delta\gamma_p$), data representing said grain size ($D_g$) of said grain (30), data representing Poisson's ration ($\nu$) and shear modulus ($\mu$) of the material of said specimen (20, 40), data representing internal stress field amplitude dislocation coefficient (k), data representing said grain geometry parameter (S) and data representing Burgers vector magnitude (b), and calculating for each said grain (30) the number of slip bands N from equation (5) by inputting said data, wherein equation (5) is:

$$\frac{\Delta\tau_{app}}{\Delta\gamma_p} = \frac{\mu}{S(1-\nu)}\left[\frac{1 + exp\left(-k\dfrac{D_g}{N\sqrt{b\,D_g/\Delta\gamma_p}}\right)}{2 + (N-2)\left(1 - exp\left(-k\dfrac{D_g}{N\sqrt{b\,D_g/\Delta\gamma_p}}\right)\right)}\right] \quad (5)$$

(g) For each said specimen (20, 40), and on each said test, and for each grain of said region (21, 41), receiving data representing said number of slip bands (N) and data representing said grain size ($D_g$) of each grain (30), and calculating for each said grain (30) the slip band number density ($N/D_g$) by inputting said data;

(h) Receiving data representing the ductile/brittle transition temperature of the material of said specimen (20), and repeating steps (c) to (g) at different temperatures ($T_m$) with $M \geq 3$ and $1 \leq m \leq M$ such that the ductile/brittle transition temperature of the material of said specimen (20) is between $T_1$ and $T_M$, in order to calculate the slip band number density ($N/D_g$) at each said temperature ($T_m$) for said un-irradiated specimen (20), and obtaining an un-irradiated curve ($C_{unirr}$) which is the variation of slip band number density ($N/D_g$) as a function of temperature for said un-irradiated specimen (20);

(i) Repeating steps (b) to (g) at different temperatures ($T'_r$) with $R \geq 3$ and $1 \leq r \leq R$ for said specimen (40) submitted to a given irradiation dose in order to calculate the slip band number density ($N/D_g$) at each said temperature ($T'_r$) for said irradiated specimen (40), and obtaining an irradiated curve ($C_{irrad}$) which is the variation of slip band number density ($N/D_g$) as a function of temperature for said irradiated specimen (40);

(j) Estimating the ductile to brittle transition shift at said irradiation dose as being equal to the temperature shift ($\Delta T$) between said irradiated curve ($C_{irrad}$) and said un-irradiated curve ($C_{unirr}$).

9. A data processing apparatus comprising means for carrying out the computer-implemented method of claim 8.

10. A computer program comprising instructions which, when the program is executed by a computer, cause the computer to carry out the computer-implemented method of claim 8.

11. A computer-readable medium having stored thereon the computer program according to claim 10.

[Fig. 1]

FIG. 1

[Fig. 2]

FIG. 2

[Fig. 3]

**FIG. 3**

[Fig. 4]

**FIG. 4**

[Fig. 5]

FIG. 5

[Fig. 6]

FIG. 6

Europäisches
Patentamt

European
Patent Office

Office européen
des brevets

**EUROPEAN SEARCH REPORT**

**Application Number**

EP 24 30 7091

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YUYA HIDEKI ET AL: "Radiation embrittlement of clad-HAZ of RPV of a decommissioned BWR plant", JOURNAL OF NUCLEAR MATERIALS, ELSEVIER B.V, NETHERLANDS, vol. 557, 14 September 2021 (2021-09-14), XP086832397, ISSN: 0022-3115, DOI: 10.1016/J.JNUCMAT.2021.153300 [retrieved on 2021-09-14] * the whole document * | 1-11 | INV. G21C17/00 ADD. G01N3/42 |
| A | CHAOUADI RACHID ED - TU SHAN-TUNG ET AL: "Assessing the master curve reference temperature T0 estimated from the Charpy impact transition curve and consequences on the correlation between Charpy DBTT- and fracture toughness T0-shifts", INTERNATIONAL JOURNAL OF PRESSURE VESSELS AND PIPING, ELSEVIER SCIENCE PUBLISHERS, BARKING, GB, vol. 208, 24 January 2024 (2024-01-24), XP087482426, ISSN: 0308-0161, DOI: 10.1016/J.IJPVP.2024.105142 [retrieved on 2024-01-24] * the whole document * | 1-11 | |
| | ----- -/-- | | **TECHNICAL FIELDS SEARCHED (IPC)** G21C G01N |

The present search report has been drawn up for all claims

| Place of search | Date of completion of the search | Examiner |
|---|---|---|
| Munich | 4 April 2025 | Opitz-Coutureau, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt

European
Patent Office

Office européen
des brevets

## EUROPEAN SEARCH REPORT

**Application Number**

EP 24 30 7091

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | XIAO XIAZI ET AL: "Theoretical models for irradiation hardening and embrittlement in nuclear structural materials: a review and perspective", ACTA MECHANICA SINICA, SPRINGER BERLIN HEIDELBERG, BERLIN/HEIDELBERG, vol. 36, no. 2, 27 February 2020 (2020-02-27), pages 397-411, XP037132360, ISSN: 0567-7718, DOI: 10.1007/S10409-020-00931-W [retrieved on 2020-02-27] * the whole document * | 1-11 | |

TECHNICAL FIELDS
SEARCHED (IPC)

The present search report has been drawn up for all claims

| Place of search | Date of completion of the search | Examiner |
|---|---|---|
| Munich | 4 April 2025 | Opitz-Coutureau, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Arrêté*, 26 February 1974
- Exploitation. *Arrêté*, 10 November 1999
- *Journal of Applied Physics*, 2022, 132, 175107
- *Journal of Nuclear Materials*, 2022, 559, 153417